# DEMANDE DE BREVET EUROPEEN

(11) **EP 3 379 731 A2**
(43) Date de publication de la demande: **26.09.2018**
(21) Numéro de dépôt: 18163640.8
(22) Date de dépôt: 23.03.2018
(51) Int. Cl.: H04B 1/3816

(54) **DISPOSITIF ELECTRONIQUE COMPORTANT UN MODULE ELECTRONIQUE RADIOFREQUENCE PERMETTANT L'INTEROPERABILITE AVEC DIFFERENTS PROTOCOLES DE COMMUNICATION RADIO**

(30) Priorité: 24.03.2017 FR 1752469
(71) Demandeur: AVIDSEN, 37170 Chambray les Tours (FR)
(72) Inventeur: HOANG, Minh-Hoa, 37320 Esvres Sur Indre (FR)
(74) Mandataire: Ipside

(57) **Abrégé**

La présente invention se rapporte à un dispositif (10) électronique, comportant une base (11) comportant un logement (12) pour une batterie, un emplacement (13) apte à recevoir un module (20) électronique, une carte mère, ledit emplacement (13) comportant un connecteur (14) femelle, et comportant un module (20) électronique comportant un connecteur (21) mâle et comportant des moyens pour communiquer selon un protocole de communication radio prédéterminé et des moyens pour réaliser au moins une fonction liée audit dispositif (10) électronique, ledit dispositif (10) comportant des moyens d'identification sur ladite carte mère permettant de connaître la fonction dudit dispositif, des éléments logiciels embarqués sur ledit module (20) électronique s'adaptant en fonction de l'identification mise en oeuvre grâce auxdits moyens d'identification.

## Description

### Domaine de l'invention

La présente invention se rapporte au domaine des dispositifs électroniques.

La présente invention concerne plus particulièrement un dispositif électronique comportant un module électronique radiofréquence permettant l'interopérabilité avec différents protocoles de communication radio.

### Etat de la technique

Il existe de nombreux protocoles de communication radio dédiés principalement à la domotique (maisons connectées et bâtiments connectés). On peut citer à titre d'exemple : LoRa, Thread, Arw, Zigbee, Z-Wave, SigFox, HomeKit, Bluetooth (dans sa version 4.2 et les versions supérieures) et EnOcean (marques déposées).

Les fabricants de dispositifs électroniques rencontrent des difficultés, car ils doivent choisir d'implémenter l'un ou l'autre de ces protocoles de communication radio.

L'inconvénient majeur des dispositifs de l'état de la technique est qu'ils ne fonctionnent qu'avec un unique protocole de communication radio.

Il existe donc un besoin dans l'état de la technique de concevoir un dispositif interopérable, apte à fonctionner avec au moins deux protocoles de communication radio.

### Exposé de l'invention

La présente invention entend remédier aux inconvénients de l'art antérieur en proposant un dispositif électronique apte à fonctionner avec une pluralité de protocoles de réseau de communication radio, grâce à un module électronique radio interchangeable.

A cet effet, la présente invention concerne, dans son acception la plus générale, un dispositif électronique, comportant une base, un emplacement apte à recevoir un module électronique, une carte mère, ledit emplacement apte à recevoir un module électronique comportant un connecteur femelle, et comportant un module électronique comportant un connecteur mâle et comportant des moyens pour communiquer selon un protocole de communication radio prédéterminé et des moyens pour réaliser au moins une fonction liée audit dispositif électronique, ledit dispositif comportant des moyens d'identification sur ladite carte mère permettant de connaître la fonction dudit dispositif, des éléments logiciels embarqués sur ledit module électronique s'adaptant en fonction de l'identification mise en oeuvre grâce auxdits moyens d'identification.

Ainsi, le dispositif selon la présente invention est apte à fonctionner avec une pluralité de protocoles de réseau de communication radio, grâce à un module électronique radio interchangeable.

Le dispositif selon la présente invention offre les avantages suivants :
- Un seul module électronique radio interchangeable à volonté ;
- Moins de difficultés liées à la production (mutualisation des composants) ;
- Plus de flexibilité pour le marché et donc pour l'utilisateur ;
- Des moyens d'identification présents sur la carte permettent de connaître le type de produit et le logiciel embarqué sur le module électronique radio s'adapte en conséquence.

De préférence, lesdits moyens pour communiquer selon un protocole de de communication radio prédéterminé comportent une antenne.

Avantageusement, ledit protocole de réseau prédéterminé est choisi dans le groupe suivant : LoRa, Thread, Arw, Zigbee, Z-Wave, SigFox, HomeKit, Bluetooth et EnOcean (marques déposées).

Selon un mode de réalisation, ladite fonction est une fonction de capteur.

Selon un mode de réalisation, ladite fonction est une fonction d'actionneur.

Selon une variante, ladite fonction de capteur est une fonction de détection de mouvement.

Selon une variante, ladite fonction est une fonction d'organe de commande.

Selon un mode de réalisation, ladite base comporte un logement pour une batterie.

### Brève description des dessins

On comprendra mieux l'invention à l'aide de la description, faite ci-après à titre purement explicatif, d'un mode de réalisation de l'invention, en référence aux Figures dans lesquelles :
- Les Figures 1, 2, 3 et 4 illustrent le dispositif selon la présente invention, dans un mode de réalisation ; et
- Les Figures 5, 6, 7 et 8 représentent le module électronique, selon différentes vues.

### Description détaillée des modes de réalisation de l'invention

La présente invention se rapporte à un dispositif 10 électronique, comportant une base 11 comportant un logement 12 pour une batterie, un emplacement 13 apte à recevoir un module 20 électronique, une carte mère, ledit emplacement 13 comportant un connecteur 14 femelle, et comportant un module 20 électronique comportant un connecteur 21 mâle et comportant des moyens pour communiquer selon un protocole de communication radio prédéterminé et des moyens pour réaliser au moins une fonction liée audit dispositif 10 électronique, ledit dispositif 10 comportant des moyens d'identification sur ladite carte mère permettant de connaître la fonction dudit dispositif, des éléments logiciels embarqués sur ledit module 20 électronique s'adaptant en fonction de l'identification mise en oeuvre grâce auxdits moyens d'identification

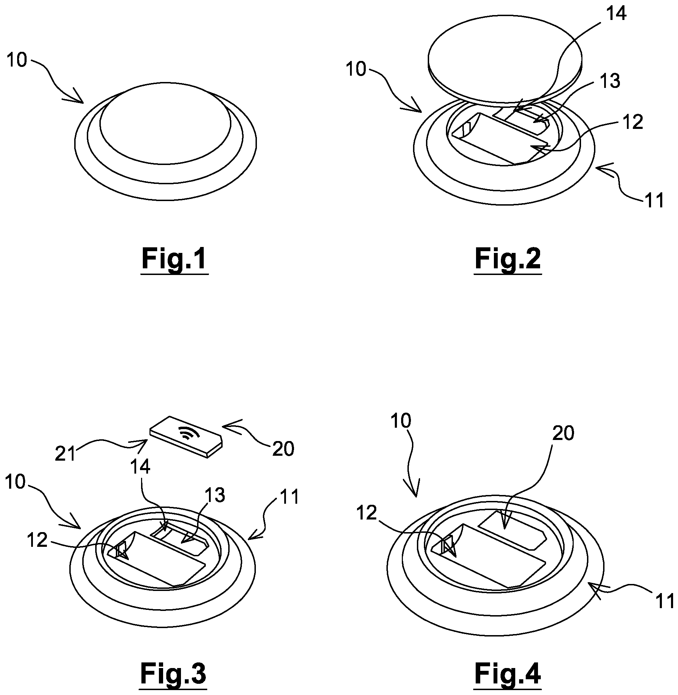

Les Figures 1, 2, 3 et 4 illustrent le dispositif 10 selon la présente invention, dans un mode de réalisation.

On observe sur la Figure 3 le dispositif 10 électronique. La base 11 comporte un logement 12 pour une batterie, un emplacement 13 apte à recevoir un module 20 électronique et une carte mère.

On observe également sur la Figure 3 que l'emplacement 13 comporte un connecteur 14 femelle.

Ce connecteur 14 femelle est configuré pour se connecter au connecteur 21 mâle du module 20 électronique (également représenté sur la Figure 3).

La base 11 comporte des moyens d'identification du logiciel présent dans le module 20 électronique.

Le module 20 électronique comporte des moyens pour communiquer selon un protocole de réseau prédéterminé et des moyens pour réaliser au moins une fonction liée audit dispositif 10 électronique.

La Figure 4 représente le dispositif 10 selon la présente invention, le module 20 électronique étant connecté à la base 11.

La Figure 1 représente le dispositif 10 selon la présente invention, un capot ayant été apposé sur la partie supérieure du dispositif.

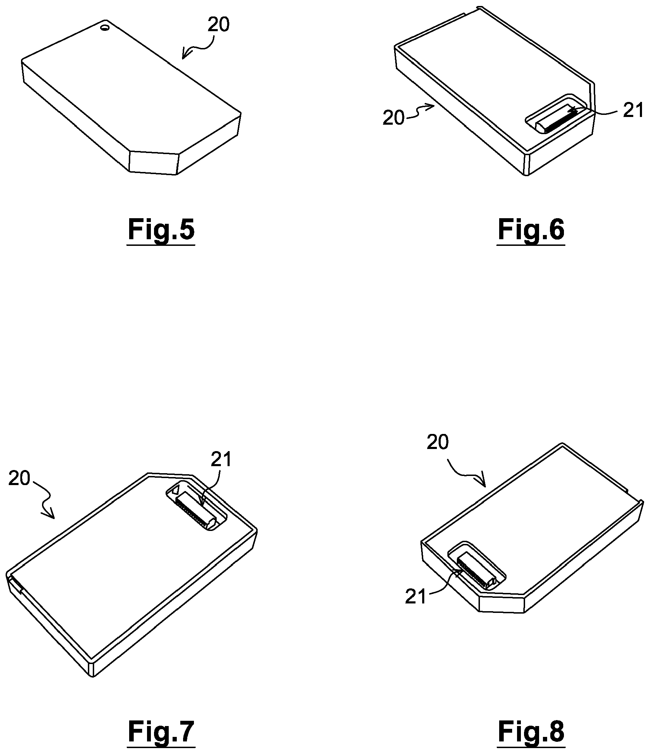

Les Figures 5, 6, 7 et 8 représentent le module 20 électronique, selon différentes vues. On observe sur ces figures le module 20 électronique, et sur les Figures 6 à 8 le connecteur 21 mâle.

Dans un mode de réalisation, lesdits moyens pour communiquer selon un protocole de réseau prédéterminé comportent une antenne.

Dans un mode de réalisation, ledit protocole de réseau prédéterminé est choisi dans le groupe suivant : LoRa, Thread, Arw, Zigbee, Z-Wave, SigFox, HomeKit, Bluetooth et EnOcean (marques déposées).

Dans un mode de réalisation, ladite fonction est une fonction de capteur.

Cette fonction de capteur peut par exemple être une fonction de détection de mouvement.

Dans un mode de réalisation, ladite fonction est une fonction d'actionneur.

Dans un mode de réalisation, ladite fonction est une fonction d'organe de commande (par exemple un thermostat).

La fonction réalisée peut être liée à un module de commande de chauffage électrique, une commande de chaudière, une prise télécommandée, la détection de l'ouverture d'une porte, une sonde de température ou un capteur d'inondation.

Ainsi, le dispositif 10 selon la présente invention est apte à fonctionner avec une pluralité de protocoles de communication radio, grâce à un module électronique radio interchangeable.

Le dispositif selon la présente invention offre les avantages suivants :
▪ Un seul module électronique radio interchangeable à volonté ;
▪ Moins de difficultés liées à la production (mutualisation des composants) ;
▪ Plus de flexibilité pour le marché et donc pour l'utilisateur ;
▪ Des moyens d'identification présents sur la carte permettent de connaître le type de produit et le logiciel embarqué sur le module électronique radio s'adapte en conséquence.

La présente invention s'applique à tout dispositif électronique dans le domaine de la domotique, comme par exemple les sirènes d'alarme.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif (10) électronique, **caractérisé en ce qu'**il comporte une base (11), un emplacement (13) apte à recevoir un module (20) électronique, une carte mère, ledit emplacement (13) comportant un connecteur (14) femelle, et **en ce qu'**il comporte un module (20) électronique comportant un connecteur (21) mâle et comportant des moyens pour communiquer selon un protocole de communication radio prédéterminé et des moyens pour réaliser au moins une fonction liée audit dispositif (10) électronique, ledit dispositif (10) comportant des moyens d'identification sur ladite carte mère permettant de connaître la fonction dudit dispositif, des éléments logiciels embarqués sur ledit module (20) électronique s'adaptant en fonction de l'identification mise en oeuvre grâce auxdits moyens d'identification.

2. Dispositif (10) électronique selon la revendication 1, **caractérisé en ce que** lesdits moyens pour communiquer selon un protocole de communication radio prédéterminé comportent une antenne.

3. Dispositif (10) électronique selon la revendication 1 ou 2, **caractérisé en ce que** ledit protocole de réseau prédéterminé est choisi dans le groupe suivant : LoRa, Thread, Arw, Zigbee, Z-Wave, SigFox, HomeKit, Bluetooth et EnOcean (marques déposées).

4. Dispositif (10) électronique selon la revendication 1, 2 ou 3, **caractérisé en ce que** ladite fonction est une fonction de capteur.

5. Dispositif (10) électronique selon la revendication 1, 2 ou 3, **caractérisé en ce que** ladite fonction est une fonction d'actionneur.

6. Dispositif (10) électronique selon la revendication 4, **caractérisé en ce que** ladite fonction de capteur est une fonction de détection de mouvement.

7. Dispositif (10) électronique selon la revendication 1, 2 ou 3, **caractérisé en ce que** ladite fonction est une fonction d'organe de commande.

8. Dispositif (10) électronique selon l'une des revendications précédentes, **caractérisé en ce que** ladite base (11) comporte un logement (12) pour une batterie.
